# EUROPÄISCHE PATENTSCHRIFT

(11) **EP 0 970 293 B1**
(45) Veröffentlichungstag und Bekanntmachung des Hinweises auf die Patenterteilung: **28.11.2001**
(21) Anmeldenummer: 98917023.8
(22) Anmeldetag: 19.03.1998
(51) Int. Cl.: F01L 1/047

(54) **NOCKENWELLE ZUR PERIODISCHEN BETÄTIGUNG VON BEWEGLICH GELAGERTEN ELEMENTEN UND VERFAHREN ZUR HERSTELLUNG EINER SOLCHEN WELLE**
CAMSHAFT FOR THE PERIODIC ACTUATION OF MOVABLY STORED ELEMENTS AND METHOD FOR THE PRODUCTION OF SUCH SHAFT
ARBRE A CAMES POUR L'ACTIONNEMENT PERIODIQUE D'ELEMENTS MOBILES ET PROCEDE DE PRODUCTION D'UN TEL ARBRE

(30) Priorität: 25.03.1997 DE 19712391
(43) Veröffentlichungstag der Anmeldung: 12.01.2000
(73) Patentinhaber: Volkswagen Aktiengesellschaft, 38436 Wolfsburg (DE)
(72) Erfinder: KULUS, Conrad, D-26607 Aurich-Walle (DE); BEIER, Alfred, D-38108 Braunschweig (DE)
(86) Internationale Anmeldenummer: EP9801624
(87) Internationale Veröffentlichungsnummer: WO9842952

(56) Entgegenhaltungen:
- DE-A- 3 616 901
- US-A- 4 630 498

## Beschreibung

Aus der EP 0 230 731 B1 bzw. der DE 36 16 901 A1 ist jeweils ein Verfahren und eine Vorrichtung bekannt, bei der eine Nockenwelle aus einer hohlen, rohrförmigen Welle gebildet ist, welche durch Öffnungen von Nocken gesteckt wird, wobei die Welle anschließend hydraulisch aufgeweitet wird, um die Begrenzungswand der Welle mit den Öffnungen der Nocken in Berührung zu bringen und diese somit auf der Welle festzulegen. Hierbei werden sowohl Nockenelemente wie auch Lagerungen zur rotatorischen Abstützung der Nockenwelle auf der Welle arretiert. Für die Herstellung dieser Nockenwelle wird ein mehrteiliger Formkasten verwendet, welcher aus einer Vielzahl von axial aufeinanderfolgenden, scheibenartigen Abschnitten gebildet ist. In diesen Abschnitten sind Ausnehmungen zur Aufnahme der Lagerabschnitte bzw. der Nocken lagerichtig ausgeformt. Dieser Stand der Technik bietet den Vorteil, daß separat hergestellte und monolithisch ausgebildete Nocken- bzw. Lagerelemente hergestellt werden können und anschließend auf einer für ihre Funktion optimierten, vergleichsweise leichtgewichtigen Welle mittels des hydraulischen Aufweitens festgelegt werden können. Die Herstellung der Nocken- bzw. der Lagerelemente erfordert jedoch einen vergleichsweise großen Aufwand, da bezüglich der Werkstoffauswahl, der Vergütung und der Oberflächenqualität hohe Anforderungen zu stellen sind.

Aus der DE 44 23 107 A1 bzw. der US 4 630 498 ist es jeweils bekannt, einen Nocken in Abweichung von der bekannten, monolithischen Ausbildung aus einer Vielzahl von aufeinanderfolgenden Flachmateriallagen bereitzustellen. Diese Anordnung bietet erhebliche Vorteile bezüglich Herstellkosten und Fertigungszeiten, da die Flachmateriallagen beispielsweise aus einem vergüteten Stahl ausgestanzt und anschließend zu einem gebrauchsfertigen Nocken paketiert werden können. Eine weitere Werkstoffbehandlung sowie eine Oberflächenbearbeitung ist nicht erforderlich.

Der Erfindung liegt die Aufgabe zugrunde, eine Nockenwelle zur periodischen Betätigung von beweglich gelagerten Elementen sowie ein Verfahren zu Ihrer Herstellung anzugeben, welche bzw. welches bezüglich der Herstellkosten und der Fertigungszeit verbessert ist.

Die Lösung dieser Aufgabe gelingt mit den Merkmalen des Patentanspruches 1 für eine Nockenwelle sowie mit den Merkmalen des Patentanspruches 5 für ein Verfahren zu Ihrer Herstellung.
Vorteilhafte Ausgestaltungen der Erfindung sind in abhängigen Ansprüchen angegeben.

Erfindungsgemäß ist vorgesehen, daß die Nockenwelle aus einer hohlzylindrischen Grundwelle sowie darauf mittels hydraulischem Aufweiten festgelegten Funktionselementen gebildet ist, wobei diese Funktionselemente, beispielsweise Nockenscheiben oder Lagerabschnitte jeweils aus einer Mehrzahl von Flachmateriallagen zusammengesetzt sind und wobei ferner als seitliche Stirnflächen der Funktionselemente zusätzliche Scheibenelemente oder Winkelelemente vorgesehen sind.
Die Erfindung bietet den Vorteil, daß verschiedenartige Funktionselemente der Nockenwelle in einem vergleichsweise kostengünstigen Herstellprozeß aus Flachmateriallagen gebildet werden können und diese Funktionselemente anschließend in einem ebenfalls kostengünstigen Prozeß auf einer Grundwelle festgelegt werden können. Gegenüber bekannten Anordnungen und Verfahren werden somit erhebliche Einsparpotentiale realisiert, ohne dabei in irgendeiner Weise funktionelle Merkmale zu vernachlässigen.
Die seitlichen Scheibenelemente oder Winkelelemente sorgen während des hydraulischen Aufweitens dafür, daß der Durchmessersprung zwischen D1 und D2 im Bereich der Schulter axial beabstandet zu den jeweils äußeren Flachmateriallagen entsteht. Hierdurch sind Spannungsspitzen im Bereich dieser Lamellenlagen sicher vermieden.

In einer bevorzugten Ausführung der Erfindung ist vorgesehen, daß die zu Paketen zusammengefaßten Flachmateriallagen in damit korrespondierende Ausnehmungen eines Formwerkzeuges eingelegt werden und dann die Grundwelle durch die Durchgangsöffnungen der Pakete gesteckt wird. Anschließend erfolgt das hydraulische Aufweiten der Grundwelle, wodurch die Pakete auf der Grundwelle festgelegt werden. Die individuellen Ausnehmungen des Formkastens können dabei in ihrer relativen Lage zueinander verdreht angeordnet sein, so daß letztendlich eine funktionsgerechte Lagezuordnung der Nocken bzw. Lagerelemente erfolgt.

In einer anderen bevorzugten Ausführungsform kann vorgesehen sein, daß die Grundwelle mit einer zumindest in eine ihrer Stirnseiten einmündenden und auf ihrer äußeren Ober fläche in Längsrichtung verlaufenden Nut versehen ist, die Funktionselemente mit einer korrespondierenden und in die Durchgangsöffnung ragenden Fahne versehen sind, so daß die Funktionselemente anschließend auf die Grundwelle unter Eingriff der Fahnen in die Nut aufgeschoben werden können. Bevorzugt können hierbei insbesondere bei den Nockenelementen die Fahnen relativ zur maximalen Nockenerhebung voneinander abweichende Positionen aufweisen, so daß trotz einer einzigen, einfach und kostengünstig herzustellenden Nut das jeweilige Nockenelement seine vorbestimmte relative Position einnimmt. Da hierbei die Lage in Umfangsrichtung eines jeden Elementes bereits vorbestimmt ist, benötigt der Formkasten vorzugsweise keine dementsprechend exakt ausgebildeten Ausnehmungen.

In beiden Ausführungsformen ist es erfindungsgemäß vorgesehen, daß nach dem hydraulischen Aufweiten der Grundwelle ein Außendurchmesser dieser Grundwelle zwischen benachbarten Funktionselementen größer gewählt ist als ein Außendurchmesser dieser Grundwelle im Bereich dieser Funktionselemente. Hierdurch ist zusätzlich zu der Festlegung der Funktionselemente durch das Aufweiten eine Sicherung dieser Elemente in axialer Richtung durch Bildung von Schultern an den Durchmessersprüngen gewährleistet. Das radiale Aufweiten im Bereich dieser Schultern wird durch entsprechend ausgeformte Anschläge im Formkasten begrenzt.

Zur Vermeidung von Spannungspitzen im Übergangsbereich des Durchmessersprunges in den einzelnen Flachmateriallagen ist es erfindungsgemäß vorgesehen, daß die das radiale Aufweiten begrenzenden Anschläge scheiben- oder winkelförmig ausgebildete Elemente umfassen, welche beidseitig der Funktionselemente an diesen anliegend dafür sorgen, daß der Durchmessersprung in einem bestimmten axialen Abstand von den jeweils äußeren Flachmateriallagen erfolgt.

In weiterer bevorzugter Ausgestaltung kann vorgesehen sein, daß die Durchgangsöffnung der Funktionselemente eine Verzahnung trägt, welche im Zusammenspiel mit dem nydraulischen Aufweiten der Grundwelle für eine zusätzliche, formschlüssige Verklammerung der Funktionselemente dient.

Weiterhin kann in Ergänzung hierzu oder alternativ die Durchgangsöffnung von einer kreisrunden Form abweichen und somit ebenfalls einen Formschluß gegen Verdrehung bewirken.

Weiterhin kann bevorzugt vorgesehen sein, daß zusätzlich zu den bereits erwähnten Nocken- bzw. Lagerelementen weitere Funktionselemente auf der Grundwelle angeordnet werden, wie beispielsweise sogenannte Kopf- bzw. Endstücke, welche ihrerseits wiederum beispielsweise Zahn- oder Kettenräder zum Antrieb dieser Nockenwelle tragen können.

Die erfindungsgemäße Nockenwelle findet bevorzugt Verwendung in Brennkraftmaschinen von Kraftfahrzeugen und betätigt in einem Zylinderkopf beweglich gelagerte als Gaswechselventile ausgebildete Elemente.
Darüber hinaus sind jedoch eine Reihe anderer Verwendungen denkbar, beispielsweise in stationär betriebenen Maschinen oder Automaten zur mechanischen Steuerung sich periodisch wiederholender Vorgänge.

Weitere Vorteile und Merkmale der Erfindung ergeben sich aus den Patentansprüchen sowie der nachfolgenden Beschreibung eines Ausführungsbeispieles anhand einer Zeichnung.
Es zeigen:
- Figur 1: eine Nockenwelle in einem Formkasten nach dem hydraulischen Aufweiten, teilweise gebrochen,

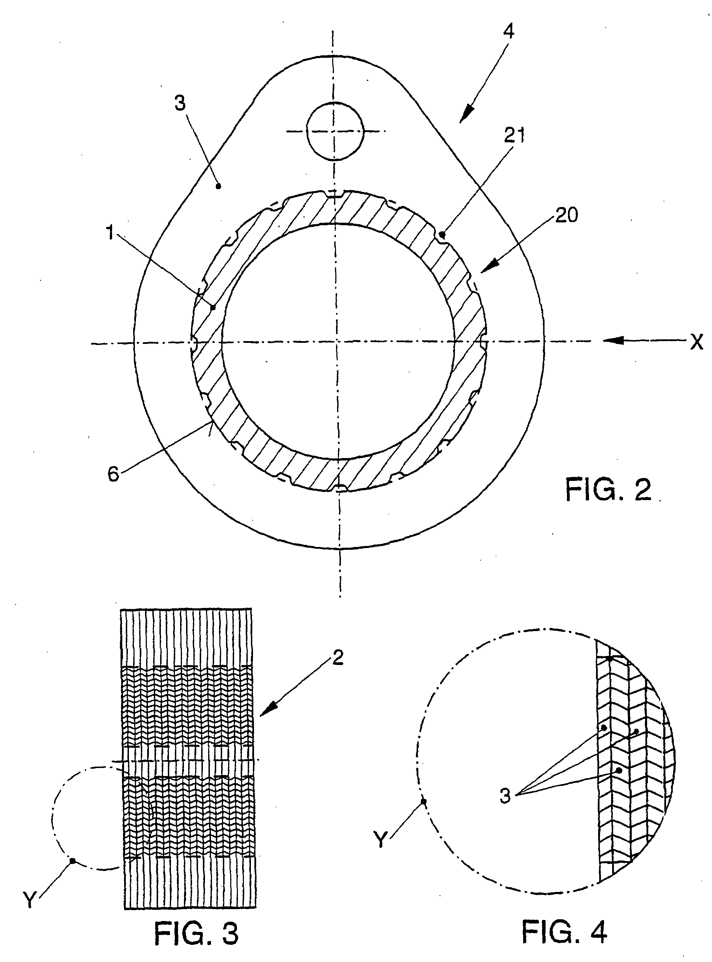

- Figur 2: einen Schnitt durch eine Ausführungsform der Erfindung entlang der Linie II - II gemäß Figur 1,
- Figur 3: eine Ansicht in Pfeilrichtung X gemäß Figur 2,
- Figur 4: eine vergrößerte Einzelheit Y gemäß Figur 3,
- Figur 5: eine Mehrzahl von Flachmateriallagen für eine Nockenscheibe,
- Figur 6: eine Nockenscheibe mit einem Anschlag nach dem hydraulischen Aufweiten und
- Figur 7: eine Nockenscheibe mit einem weiteren Anschlag nach dem hydraulischen Aufweiten.

Eine Nockenwelle besteht im wesentlichen aus einer Grundwelle 1 sowie aus mehreren, axial zueinander beabstandet darauf angeordneten Funktionselementen 2. Diese Funktionselemente 2 sind jeweils aus einer Mehrzahl von Flachmateriallagen 3 gebildet, welche zu einem Paket zusammengefaßt beispielsweise ein als eine Nockenscheibe 4 ausgebildetes Funktionselement 2 oder ein als Lagerring 5 ausgebildetes Funktionselement 2 bilden.

Jedes Funktionselement 2 weist eine Durchgangsöffnung 6 auf, welche in ihrer Gesamtheit aus allen Öffnungen 7 eines Paketes von Flachmateriallagen 3 gebildet ist.

Durch diese Durchgangsöffnungen 6 wird die Grundwelle 1 eingefädelt, wobei diese zunächst hohlzylindrisch mit einem Außendurchmesser ausgebildet ist, welcher geringfügig geringer bemessen ist als ein engster Durchmesser der Durchgangsöffnung 6. Nach dem alle Funktionselemente 2 in vorbestimmten, axial zueinander beabstandeten Abschnitten 8 der Grundwelle 1 positioniert sind, wird diese innerhalb eines Formwerkzeuges 10 in ihrem inneren mit hydraulischem Druck beaufschlagt.
Bei diesem an sich bekannten Verfahren wird beispielsweise ein flüssiges Medium in die Grundwelle eingefüllt und dieses anschließend mit einem ausreichenden Druck beaufschlagt. Aufgrund des Überdruckes erfährt die Grundwelle eine radiale Aufweitung, infolge der sich die äußere Oberfläche der Grundwelle 1 dem Umfang der Durchgangsöffnung 6 nähert und schließlich an diesem zur Anlage kommt. Infolge dessen sind die Funktionselemente 2 auf der Grundwelle 1 festgelegt und somit die gesamte Nockenwelle gebildet.

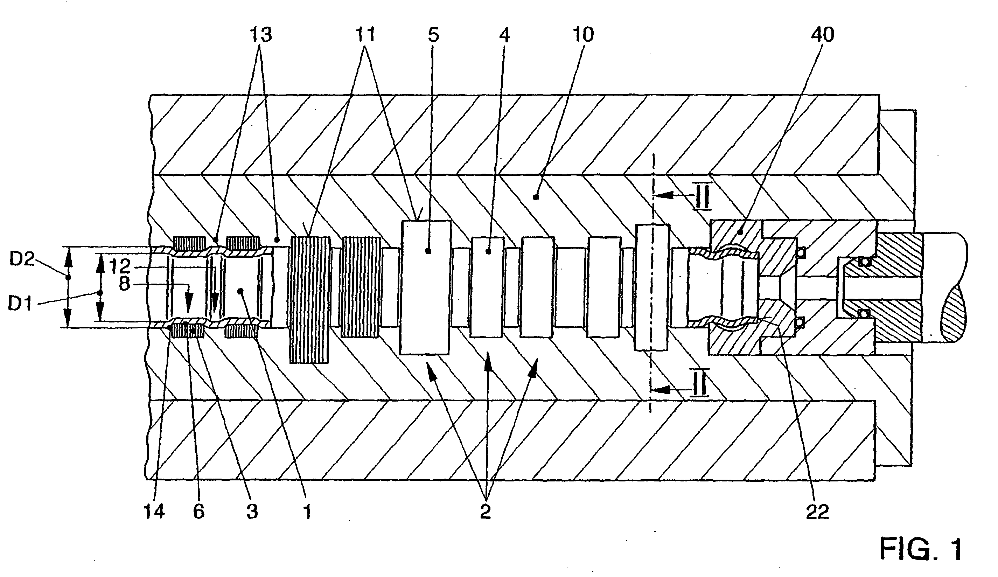

In einer Ausführungsform gemäß Figur 1 werden zunächst Nockenscheiben 4 bzw. Lagerringe 5 durch paketieren einer Mehrzahl von Flachmateriallagen 3 gebildet und diese Pakete anschließend in funktionselementindividuelle Ausnehmungen 11 des Formwerkzeuges 10 lagerichtig eingelegt. Anschließend wird die auf ihrem Innen- und ihrem Außenumfang zunächst zylindrisch ausgebildete, hohle Grundwelle 1 durch die Durchgangsöffnungen 6 gefädelt und anschließend in vorbeschriebener Weise unter Druck gesetzt.
In dem Formwerkzeug 10 sind benachbart zu zwischen den die Funktionselemente 2 tragenden Abschnitte 8 ausgebildeten Abschnitten 12 radial wirksame Anschläge 13 angeordnet. Während des hydraulischen Aufweitens wird die radiale Dehnung der Grundwelle 1 somit im Bereich der Abschnitte 8 durch den Umfang der Durchgangsöffnungen 6 und im Bereich der Abschnitte 12 durch die Anschläge 13 begrenzt. Die sich dabei einstellenden Durchmesser der Grundwelle 1 sind so bemessen, daß ein Außendurchmesser D1 im Bereich der Abschnitte 8 geringer bemessen ist als ein Außendurchmesser D2 im Bereich der Anschläge 13. An durch den Durchmessersprung zwischen D1 und D2 gebildeten Schultern 14 liegen seitliche Stirnflächen 15 der Funktionselemente 2 als axiale Lagesicherung.

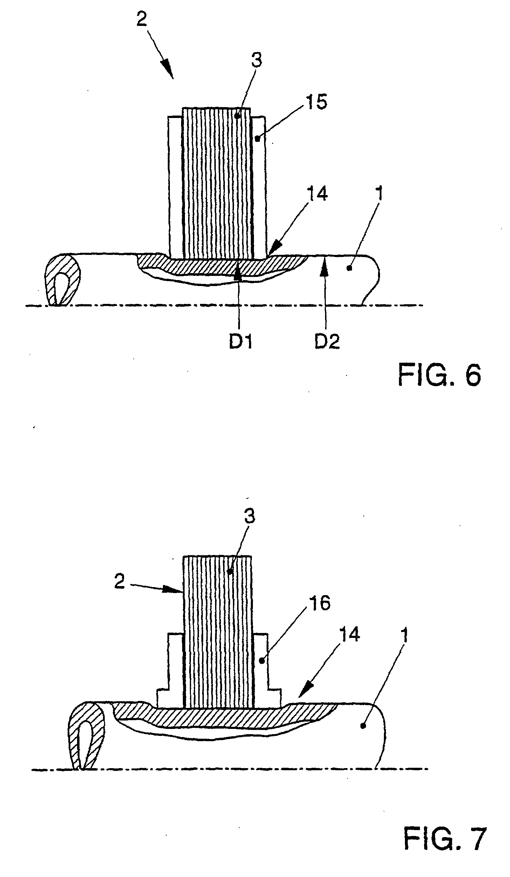

Gemäß einer Ausführungsform nach den Figuren 6 oder 7 können die Anschläge 13 Scheibenelemente 15 oder Winkelelemente 16 aufweisen. Diese sorgen während des hydraulischen Aufweitens dafür, daß der Durchmessersprung zwischen D1 und D2 im Bereich der Schulter 14 axial beabstandet zu den jeweils äußeren Flachmateriallagen 3 entsteht. Hierdurch sind Spannungspitzen im Bereich dieser Lamellenlagen sicher vermieden.

Für eine erhöhte Sicherheit gegen Verdrehen der Funktionselemente 2 auf der fertiggestellten Nockenwelle kann jede Öffnung 7 mit einer Verzahnung 20 versehen sein, wobei sich deren radial in diese Öffnung 7 weisende Zähne 21 während des hydraulischen Aufweitens der Grundwelle 1 in diese einarbeiten und für die Übertragbarkeit hoher Drehmomente sorgen.

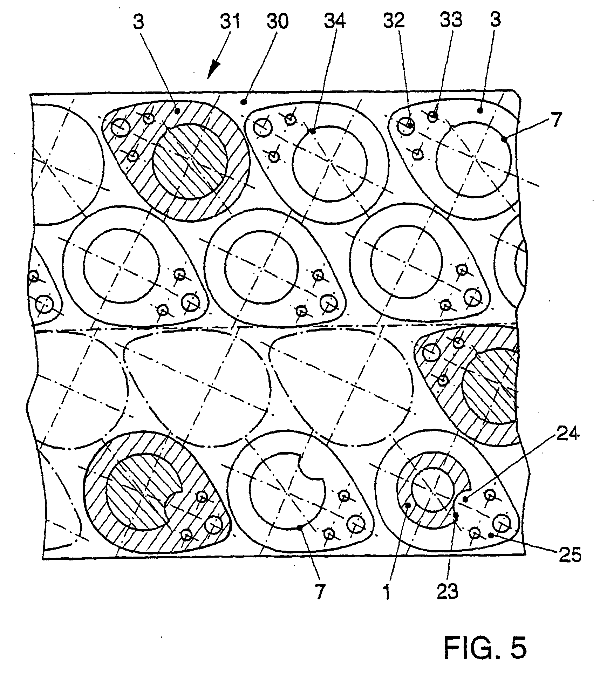

In einer anderen Ausführungsform der Erfindung sind die Ausnehmungen 11 des Formwerkzeuges 10 entbehrlich, da die Grundwelle 1 auf ihrer äußeren Oberfläche mit einer zumindest in einer Stirnseite 22 der Grundwelle 1 mündenden Nut 23 versehen und jede Flachmateriallage 3 mit einer radial in die Öffnung 7 weisenden, mit der Nut 23 korrespondierenden Fahne 24 versehen ist. Gemäß dieser Ausführungsform werden die Funktionselemente 2 unter Eingriff der Fahnen 24 in die Nut 23 auf die Grundwelle 1 geschoben und diese anschließend hydraulisch geweitet. Mit Hilfe der relativen Lage der Fahne 24 in der Durchgangsöffnung 6 bzw. in den Öffnungen 7 ist eine exakte Umfangspositionierung der Funktionselemente 2 auf der Nockenwelle gewährleistet.
Wie aus Figur 5 ersichtlich, weicht die relative Lage der Fahne 24 zu der jeweiligen Nockenerhebung 25 einer Flachmateriallage 3 voneinander ab. Nur für ein besseres Verständnis ist in diese Figur 5 bezüglich der rechts unten gezeigten Flachmateriallage 3 das Zusammenwirken mit der Grundwelle 1 und deren Nut 23 dargestellt.
Im übrigen zeigt Figur 5 ein Flachmaterialband 30 aus kaltgewalztem Stahlblech, beispielsweise Ck 70. Aus diesem sich von links nach rechts innerhalb einer Stanzmaschine bewegenden Band werden mit Hilfe eines geeigneten Stanzwerkzeuges beispielsweise jeweils vier entlang einer schrägliegenden Reihe 31 liegende Flachmateriallagen 3 ausgestanzt.

Auch bei dieser Ausführungsform der Erfindung kann zusätzlich die Verzahnung 20 vorgesehen werden.

Figur 5 zeigt exemplarisch in der oberen Hälfte Flachmateriallagen 3, wie sie für die zuerst beschriebene Ausführungsform ohne Nut 23 und Fahnen 24 Verwendung finden können. Des weiteren sind Durchbrechungen 32 und 33 einer jeden Flachmateriallage 3 dargestellt. Diese dienen einerseits der Gewichtserleichterung und können daher, je nach Beanspruchung auch in größerer Anzahl als gezeigt vorhanden sein. Die etwas größer bernessenen Durchbrechungen 32 können ebenso zur Aufnahme eines nicht gezeigten Stiftes zur Verbesserung der Paketierbarkeit der Flachmateriallagen 3 dienen.

Das Handling der zu Paketen zusammengefaßten Mehrzahl von Flachmateriallagen 3 kann durch Verkleben, durch Nieten, Verstemmen oder durch Laserschweißen oder ähnliches der Flachmateriallagen 3 untereinander verbessert werden. Nieten können hierbei beispielsweise die Durchbrechungen 32 und/oder 33 durchsetzen. Eine Laserschweißung kann beispielsweise in einer eigens dafür vorgesehenen, und in Figur 5 an einigen Flachmateriallagen 3 gezeigten, sich radial bezüglich der Öffnung 7 nach außen erstreckenden Nut 34 erfolgen.

Ist eine direkte Lagerung der Grundwelle 1 in einem Maschinenteil geplant, so kann der in Figur 1 gezeigte Lagerring 5 entfallen und beispielsweise die in dessen Abschnitt liegende Außenoberfläche der Grundwelle 1 als Lagerfläche dienen. Mit Hilfe des vorbeschriebenen hydraulischen Aufweitens und einer korrespondierenden Ausnehmung 11 ist die hierfür erforderliche, hohe Präzision gewährleistet.

Zusätzlich zu den beschriebenen Funktionselementen 2 in Form der Nockenscheiben 4 und des Lagerringes 5 kann die Nockenwelle ein angeformtes, in Figur 1 links liegendes und nicht gezeigtes Kopfstück sowie ein rechts liegendes Endstück 40 aufweisen. Diese Kopf-bzw. Endstücke 40 können durch das hydraulische Aufweiten form- und kraftschlüssig mit der Grundwelle 1 verbunden werden und können beispielsweise zum Antrieb eines angeflanschten, von der Nockenwelle angetriebenen Aggregates oder zur Aufnahme einer die Nockenwelle antreibenden Riemen- oder Kettenscheibe dienen.

In Abweichung von der gezeigten, im wesentlichen kreisrunden Form der Öffnungen 7 kann diese durch einfache Abwandlung des Stanzwerkzeuges beispielsweise eine ovale oder näherungsweise dreieckige Form aufweisen, wobei dann bei Verwendung einer zunächst kreisrunden Grundwelle 1 eine zusätzliche formschlüssige Verklammerung der Funktionselemente 2 erfolgt.

Zusätzlich zu den bereits genannten Vorteilen bezüglich Fertigungszeiten und Materialkosten etc. weist diese gebaute Nockenwelle ein günstiges akustisches Verhalten aufgrund der inneren Reibung zwischen den Grenzflächen einander zugewandter Flachmateriallagen 3 auf.

## Patentansprüche

1. Nockenwelle zur periodischen Betätigung von beweglich gelagerten Elementen, mit einer hohlen Grundwelle (1) sowie darauf mittels hydraulischem Aufweiten dieser Grundwelle (1) festgelegten Funktionselementen (2) mit einer Durchgangsöffnung (6) zur Aufnahme der Grundwelle (1), wobei die Grundwelle (1) im Bereich der Durchgangsöffnung (6) einen Außendurchmesser (D1) aufweist, welcher geringer bemessen ist als ein Außendurchmesser (D2) der Grundwelle (1) unmittelbar benachbart zu einer seitlichen Stirnfläche (15) der Funktionselemente (2),
**dadurch gekennzeichnet, daß**
die Funktionselemente (2) aus einer Mehrzahl von Flachmateriallagen (3) zusammengesetzt sind, und daß als seitliche Stirnflächen der Funktionselemente (2) zusätzliche Scheibenelemente (15) öder Winkelelemente (16) vorgesehen sind.

2. Nockenwelle nach Anspruch 1, **dadurch gekennzeichnet, daß** zumindest ein Funktionselement (2) aus einem mit der Durchgangsöffnung (6) versehenen Lagerring (5) zur Lagerung der Nockenwelle besteht.

3. Nockenwelle nach einem der Ansprüche 1 oder 2, **dadurch gekennzeichnet, daß** die Grundwelle (1) eine in Längsrichtung verlaufende Nut (23) auf ihrer äußeren Oberfläche trägt, in welche korrespondierend ausgebildete, in die Durchgangsöffnung (6) abragende Fahnen (24) der Funktionselemente (2) eingreifen.

4. Nockenwelle nach Anspruch 3 **dadurch gekennzeichnet, daß** als Nockenscheiben (4) ausgebildete Funktionselemente (2) auf der Grundwelle (1) angeordnet sind, deren Positionen der Fahnen (24) relativ zu einer Nockenerhebung (25) voneinander abweichen.

5. Verfahren zur Herstellung einer Nockenwelle nach Anspruch 1, mit den Schritten
a) Aufbringen einer Mehrzahl von aus Flachmateriallagen (3) gebildeten Paketen auf vorbestimmte, axial zueinander beabstandete Abschnitte (8) der Grundwelle (1),
b) Hydraulisches Aufweiten der Grundwelle (1) zumindest in den die Pakete tragenden Abschnitten (8) zum verdrehsicheren Festlegen auf der Grundwelle (1), wobei das hydraulische Aufweiten in einem die Nockenwelle aufnehmenden Formwerkzeug (10) erfolgt, welches mittels Anschlägen (13) das radiale Aufweiten der Grundwelle (1) in den zwischen den die Pakete tragenden Abschnitte (8) liegenden Abschritten (12) derart begrenzt, daß der sich nach dem hydraulischen Aufweiten einstellende Außendurchmesser (D2) in diesen Abschnitten (12) größer bemessen ist als der Außendurchmesser (D1) der die Pakete tragenden Abschnitte (8), wobei an den Anschlägen (13) Scheibenelemente (15) oder Winkelelemente (16) angeordnet werden.

6. Verfahren nach Anspruch 5, **dadurch gekennzeichnet, daß** vor dem Schritt a) in die Grundwelle (1) eine in Längsrichtung verlaufende Nut (23) eingebracht wird, die zumindest in einer Stirnseite (22) der Grundwelle (1) mündet, und die Flachmateriallagen (3), mit korrespondierenden Fahnen (24) versehen, im Schritt a) unter Eingriff der Fahnen (24) in diese Nut (23) aufgebracht werden.

7. Verfahren nach Anspruch 5, **dadurch gekennzeichnet, daß** zunächst in einem Schritt a1) die zu Paketen zusammengefaßten Flachmateriallagen (3) in funktionselementindividuelle Ausnehmungen (11) eines Formwerkzeuges (10) eingelegt werden und dann in einem Schritt a2) die Grundwelle (1) durch die Durchgangsöffnungen (6) gesteckt wird, so daß die Pakete relativ zu den vorbestimmten Abschniten (8) der Grundwelle (1) positioniert sind.

8. Verfahren nach einem der Ansprüche 5 bis 7, **dadurch gekennzeichnet, daß** die Anschläge (13) derart ausgebildet sind, daß sich die durch den Übergang vom Außendurchmesser (D1) auf den Außendurchmesser (D2) einstellende Schulter (14) axial beabstandet zu den jeweils äußeren Flachmateriallagen (3) ausbildet.

## Claims

1. Camshaft for periodic actuation of moveably mounted elements, having a hollow base shaft (1) and fixed thereon by means of hydraulically expanding this base shaft (1) functional elements (2) which have a through-going orifice (6) for the purpose of receiving the base shaft (1), wherein the base shaft (1) in the region of the through-going orifice (6) comprises an outer diameter (D1) which is smaller than an outer diameter (D2) of the base shaft (1) directly adjacent to a lateral end face (15) of the functional elements (2),
**characterised in that**
the functional elements (2) are composed of a plurality of flat material layers (3) and that the lateral end faces of the functional elements (2) are additional disc elements (15) or angle elements (16).

2. Cam shaft in accordance with claim 1, **characterised in that** at least one functional element (2) consists of a bearing ring (5) which is provided with the through-going orifice (6) for the purpose of mounting the cam shaft.

3. Cam shaft in accordance with any one of claims 1 or 2, **characterised in that** the base shaft (1) has on its outer surface a longitudinal groove (23) into which engage correspondingly designed lugs (24) of the functional elements (2), which lugs protrude into the through-going orifice (6).

4. Cam shaft in accordance with claim 3, **characterised in that** functional elements (2) which are designed as cam discs (4) are disposed on the base shaft (1) and the positions ofthe lugs (24) on the said functional elements differ from each other relative to a cam elevation (25).

5. Method for producing a cam shaft in accordance with claim 1, comprising the steps of:
a) applying a plurality of packets, formed from flat material layers (3) on predetermined, axially mutually spaced sections (8) of the base shaft (1),
b) hydraulically expanding the base shaft (1) at least in the sections (8) carrying the packets for the purpose of non-rotatable attachment to the base shaft (1), wherein a forming tool which receives the cam shaft is used to expand said shaft hydraulically, said tool limiting by means of stops (13) the radial expansion of the base shaft (1) in the sections (12), which lie between the sections (8) carrying the packets, in such a manner that the outer diameter (D2) created by the hydraulic expansion is larger in these sections (12) than the outer diameter (D1) of the sections (8) which carry the packets, wherein disc elements (15) or angle elements (16) are disposed on the stops (13).

6. Method in accordance with claim 5, **characterised in that** prior to step a) the base shaft (1) is provided with a longitudinal groove (23) which issues at least in an end face (22) of the base shaft (1) and the flat material layers (3) with corresponding lugs (24) are applied in step a) by the lugs (24) engaging in this groove (23).

7. Method in accordance with claim 5, **characterised in that** initially in a step a1) the flat material layers (3), which are grouped together to form packets, are placed into functional element-individual recesses (11) of a forming tool (10) and then in a step a2). the base shaft (1) is pushed through the through-going orifices (6), so that the packets are positioned relative to the predetermined sections (8) of the base shaft (1).

8. Method in accordance with any one of claims 5 to 7, **characterised in that** the stops (13) are formed in such a manner that the shoulder (14) created by the transition from the outer diameter (D1) to the outer diameter (D2) is formed in an axially spaced manner with respect to the respective outer flat material layers (3).

## Revendications

1. Arbre à cames pour l'actionnement périodique d'éléments montés mobiles, avec un arbre de base (1) creux ainsi que des éléments fonctionnels (2) fixés dessus au moyen d'un élargissement hydraulique de cet arbre de base (1) et comportant une ouverture de passage (6) pour loger l'arbre de base (1), l'arbre de base (1) dans la zone de l'ouverture de passage (6) présentant un diamètre extérieur (D1) qui est inférieur à un diamètre extérieur (D2) de l'arbre de base (1) juste au voisinage d'une surface frontale latérale (15) des éléments fonctionnels (2),
**caractérisé en ce que** les éléments fonctionnels (2) sont composés d'une multiplicité de couches de matériaux plats (3) et **en ce que** des éléments en disques (15) ou des éléments en coudes (16) supplémentaires sont prévus comme surfaces frontales latérales des éléments fonctionnels (2).

2. Arbre à cames selon la revendication 1, **caractérisé en ce qu'**au moins un élément fonctionnel (2) est constitué d'un anneau de palier (5) muni de l'ouverture de passage (6) et destiné à loger l'arbre à cames.

3. Arbre à cames selon l'une quelconque des revendications 1 ou 2, **caractérisé en ce que** l'arbre de base (1) porte une rainure (23) qui s'étend en direction longitudinale sur sa surface extérieure et dans laquelle pénètrent des drapeaux (24), conçus de manière correspondante et dépassant dans l'ouverture de passage (6), des éléments fonctionnels (2).

4. Arbre à cames selon la revendication 3, **caractérisé en ce que** des éléments fonctionnels (2) conçus comme des disques à cames (4) sont montés sur l'arbre de base (1) et les positions des drapeaux (24) relativement à une bosse de came (25) s'écartent les unes des autres.

5. Procédé pour la fabrication d'un arbre à cames selon la revendication 1, comportant les étapes suivantes :
a) application d'une multiplicité de paquets formés de couches de matériaux plats (3) sur des tronçons (8) prédéterminés, à une certaine distance axiale les uns des autres, de l'arbre de base (1),
b) élargissement hydraulique de l'arbre de base (1) au moins dans les tronçons (8) portant les paquets pour la fixation, contre toute torsion, sur l'arbre de base (1), l'élargissement hydraulique s'effectuant dans un outil de formage (10) qui reçoit l'arbre à cames et qui limite au moyen de butées (13) l'élargissement radial de l'arbre de base (1) dans les tronçons (12) situés entre les tronçons (8) portant les paquets de telle sorte que le diamètre extérieur (D2) obtenu après l'élargissement hydraulique dans ces tronçons (12) est supérieur au diamètre extérieur (D1) des tronçons (8) portant les paquets, des éléments en disques (15) ou des éléments en coude (16) étant placés contre les butées (13).

6. Procédé selon la revendication 5, **caractérisé en ce que**, avant l'étape a), on pratique dans l'arbre de base (1) une rainure (23) qui s'étend en direction longitudinale et qui débouche au moins dans un côté frontal (22) de l'arbre de base (1) et **en ce qu'**on applique à l'étape a) les couches de matériaux plats (3), munies de drapeaux (24) correspondants, tandis que les drapeaux (24) pénètrent dans cette rainure (23).

7. Procédé selon la revendication 5, **caractérisé en ce qu'**on place d'abord à l'étape a1) les couches de matériaux plats (3) rassemblées en paquets dans des évidements (11) individuels, propres aux éléments fonctionnels, d'un outil de formage (10) et on enfile ensuite à l'étape a2) l'arbre de base (1) à travers les ouvertures de passage (6) de telle sorte que les paquets sont positionnés relativement aux tronçons prédéterminés (8) de l'arbre de base (1).

8. Procédé selon l'une quelconque des revendications 5 à 7, **caractérisé en ce que** les butées (13) sont conçues de telle sorte que l'épaulement (14) créé par la transition du diamètre extérieur (D1) au diamètre extérieur (D2) est conçu à une certaine distance axiale des couches de matériaux plats (3) respectivement extérieures.
